# FASCICULE DE BREVET EUROPEEN

(11) **EP 2 328 718 B1**
(45) Date de publication et mention de la délivrance du brevet: **11.06.2014**
(21) Numéro de dépôt: 09811135.4
(22) Date de dépôt: 07.09.2009
(51) Int. Cl.: B24C 1/06, B24C 1/08, B24C 9/00, B23K 26/16, B23K 26/36, B23K 35/22

(54) **PROCEDE ET DISPOSITIF DE TRAITEMENT D'UNE SURFACE**
VERFAHREN UND VORRICHTUNG ZUR BEHANDLUNG EINER OBERFLÄCHE
METHOD AND DEVICE FOR TREATING A SURFACE

(30) Priorité: 08.09.2008 FR 0856013
(43) Date de publication de la demande: 08.06.2011
(73) Titulaire: Commissariat à l'Énergie Atomique et aux Énergies Alternatives, 75015 Paris (FR)
(72) Inventeur: HERNANDEZ, Caroline, F-13860 Peyrolles (FR)
(74) Mandataire: Ilgart, Jean-Christophe
(86) Numéro de dépôt international: PCT/EP2009/061517
(87) Numéro de publication internationale: WO 2010/026242

(56) Documents cités:
- EP-A- 1 188 520
- DE-A1- 2 720 547
- DE-B1- 1 596 833
- US-A- 4 365 135
- US-A- 5 881 445

## Description

### DOMAINE TECHNIQUE

La présente invention se rapporte à un procédé de traitement d'une surface, à un dispositif permettant la mise en oeuvre de ce procédé, ainsi qu'à l'utilisation d'un aérogel pour piéger les matières qui sont éjectées d'une surface au cours d'un traitement auquel est soumise cette surface.

Elle est susceptible de trouver des applications dans tous les domaines où l'on réalise des opérations de nettoyage, de satinage, de polissage, d'ébavurage, de gravure, de marquage ou encore de préparation de surfaces comme la création de rugosités avant collage, métallisation, émaillage, peinture ou vernissage.

Elle est plus particulièrement utile dans les domaines où ce type d'opérations est effectué sur des pièces qui, parce qu'elles sont de petite taille ou de nature précieuse ou parce qu'elles présentent des surfaces fragilisées, nécessitent des traitements de haute précision.

De tels domaines sont notamment l'électronique, la microélectronique, l'optique, l'optoélectronique, la bijouterie, la joaillerie et la restauration d'oeuvres d'art et d'antiquités.

### ETAT DE LA TECHNIQUE ANTERIEURE

Il existe de nombreuses techniques de traitement de surface et, en particulier, de nettoyage de surfaces polluées, qui sont basées sur une interaction chimique ou physique entre la surface à traiter et un agent qui est projeté sur cette surface à une vitesse plus ou moins élevée.

Il s'agit principalement de techniques qui consistent à projeter :
- un liquide sous pression du type eau, solvant organique ou azote, éventuellement en association avec des ultra-sons, ou un gaz comme de l'air comprimé ; ou bien
- un abrasif - c'est-à-dire un produit se présentant sous la forme de particules solides finement divisées - seul ou dans un vecteur liquide (typiquement de l'eau) ou gazeux (typiquement de l'air comprimé) ; ou bien
- des particules d'une entité chimique qui, dans des conditions normales de température et de pression (25°C, 1 atmosphère), est plus stable sous forme gazeuse que sous d'autres formes, cette entité étant typiquement du gaz carbonique que l'on projette à l'état solide (c'est-à-dire sous forme de glace carbonique ou carboglace) ou à l'état supercritique et qui passe directement de cet état à l'état gazeux (c'est-à-dire sans passer sans par l'état liquide) ; ou bien encore
- un rayonnement électromagnétique du type faisceau laser ou micro-ondes, qui a pour effet d'induire un changement brutal des paramètres physiques de la surface à traiter, comme sa température, ce qui conduit à la vaporisation et à la dispersion de cette surface.

Quelle que soit la technique utilisée, son utilisateur peut souhaiter, notamment dans le cadre du nettoyage d'une surface polluée, récupérer les déchets produits par le traitement de la surface soit pour analyser ces déchets, par exemple pour en connaître la taille ou la composition, soit pour éviter qu'ils ne se redéposent sur la surface à traiter ou qu'ils ne contaminent l'environnement de cette surface, par exemple si ces déchets sont toxiques ou radioactifs.

Les techniques basées sur la projection d'un liquide ou d'un abrasif en milieu liquide permettent de récupérer assez facilement les déchets générés par le traitement de surface puisque le liquide qui s'écoule de la surface traitée tend naturellement à entraîner ces déchets avec lui. Cependant, les volumes de liquide utilisé et, donc, d'effluent produit sont généralement importants et les opérations nécessaires pour isoler les déchets du reste de l'effluent, si l'on souhaite par exemple les analyser, ont un coût élevé. En outre, il se produit inévitablement des interactions entre les déchets et le liquide qui ont pour effet de modifier physiquement et/ou chimiquement ces déchets et, par voie de conséquence, de fausser leur analyse.

Dans le cas des techniques basées sur la projection d'un gaz, d'un abrasif en milieu gazeux, de gaz carbonique à l'état solide ou supercritique, ou d'un rayonnement électromagnétique, les déchets produits par le traitement de surface sont généralement véhiculés dans un flux gazeux qui est conduit vers un filtre fibreux ou électrostatique dans lequel ces déchets sont retenus. Toutefois, l'utilisation d'un flux gazeux pour véhiculer les déchets n'empêche pas une partie de ces déchets de se redéposer sur la surface traitée du fait des turbulences générées. En outre, les filtres utilisés à ce jour nécessitent d'être soumis à des traitements relativement lourds si l'on souhaite en extraire les déchets en vue de les analyser.

Par ailleurs, que les déchets soient récupérés dans un flux liquide ou dans un flux gazeux, cette récupération est basée, dans la plupart des systèmes, sur une aspiration de ce flux. Or, de tels systèmes sont difficilement utilisables dans certains milieux et, notamment, dans des milieux confinés ou exigus, ainsi que dans certaines conditions de travail comme des conditions de dépression (vide) ou de température élevée. De plus, l'aspiration augmente notablement le risque de voir les déchets perdre leur intégrité physique et, par voie de conséquence, de fausser leur analyse.

L'inventeur s'est donc fixé pour but de fournir un procédé de traitement de surface qui soit, d'une manière générale, exempt de tous les inconvénients mentionnés ci-dessus.

Plus spécifiquement, il s'est fixé pour but de fournir un procédé de traitement de surface qui permette de collecter tous les déchets produits par ce traitement et ce, en conservant intactes les caractéristiques physiques et chimiques de ces déchets de sorte à garantir la fiabilité des analyses auxquelles ils sont susceptibles d'être soumis ultérieurement.

Il s'est également fixé pour but que ce procédé soit applicable à tout type de surface quels qu'en soient la nature, la taille et l'état, et puisse être mis en oeuvre dans tout type d'environnement et de conditions, notamment de pression et de température.

Il s'est encore fixé pour but que ce procédé soit simple à utiliser, ne nécessite pas d'équipements lourds ou onéreux, et ait des coûts de mise en oeuvre compatibles avec des impératifs industriels.

Il s'est en outre fixé pour but de fournir un dispositif qui permette de mettre en oeuvre ce procédé.

Les documents DE 1596833 et US 4365135 divulguent un dispositif selon le préambule de la revendication 16.

### EXPOSE DE L'INVENTION

Ces buts et d'autres encore sont atteints par l'invention qui propose, en premier lieu, un procédé de traitement d'une surface que comporte un objet, qui comprend :
- l'éjection de matières à partir de cette surface par projection sur ladite surface d'un agent d'éjection choisi parmi les gaz, les fluides à l'état supercritique, les matériaux solides sous forme divisée, éventuellement dans un vecteur gazeux, et les rayonnements électromagnétiques ; et
- le piégeage des matières ainsi éjectées dans une ou plusieurs pièces d'un aérogel situées sur les trajectoires de ces matières.

Ainsi, selon l'invention, l'éjection des matières de la surface à traiter peut être réalisée au moyen :
* d'un gaz comme l'air ;
* d'un fluide à l'état supercritique comme le CO₂ supercritique ;
* d'un matériau solide se présentant sous forme divisée, auquel cas ce matériau peut être un abrasif de nature inorganique (sable, corindons, grenailles métalliques, billes de verre, de quartz ou de céramique, particules de bicarbonate de soude, etc), un abrasif de nature organique (particules de matières plastiques du type polyamides, polycarbonates, chlorures de polyvinyle ou acryliques, amidons de blé ou de maïs, farines de blé, agicides du type noyaux et coques de fruits concassés, etc), ou un matériau non abrasif comme des pellets de carboglace ; ou encore
* d'un rayonnement électromagnétique comme un faisceau laser ou des micro-ondes.

Conformément à l'invention, on préfère utiliser un agent d'éjection qui ne génère pas de déchets autres que ceux correspondant aux matières éjectées de la surface. C'est la raison pour laquelle on préfère que cet agent soit un gaz, un fluide à l'état supercritique, de la carboglace ou un rayonnement électromagnétique.

Dans le cadre de l'invention, le terme « *aérogel* » est utilisé dans son acceptation habituelle, à savoir qu'il désigne tout gel dont la phase liquide a été remplacé par de l'air (par cryo-dessication, séchage supercritique ou autre) et dont le réseau liquide a donc été transformé en un réseau de pores.

Ainsi, l'aérogel susceptible d'être utilisé comme piège dans le procédé de l'invention peut notamment être :
- un aérogel inorganique à base d'un oxyde métallique simple comme un aérogel d'alumine, de silice, de magnésie, d'oxyde de chrome, d'oxyde de fer, d'oxyde d'étain, d'oxyde de titane, d'oxyde de vanadium, d'oxyde de tungstène, d'oxyde de niobium ou d'oxyde de zirconium ;
- un aérogel inorganique à base d'un oxyde métallique mixte comme un oxyde d'alumine/magnésie, d'oxyde de fer/ alumine, d'oxyde de fer/silice, d'oxyde de nickel/ alumine, d'oxyde de nickel/alumine/silice, de silice/ alumine, d'oxyde de titane/magnésie, ou d'un oxyde métallique multiple comme un aérogel d'oxyde de nickel/alumine/silice ou de mullite ; ou
- un aérogel organique comme un aérogel d'agar-agar, de caoutchouc, de polyamide, de polyester, de polyuréthanne, de polyphénol, de divinylbenzène, de phénol/formaldéhyde, d'urée/formaldéhyde, de mélamine/ formaldéhyde, de résorcinol/formaldéhyde, de phloro-glucinol/formaldéhyde ou de chlorure de polyvinyle.

La structure des aérogels, leurs propriétés et leurs procédés d'obtention ont largement été décrits dans la littérature. A cet égard, le lecteur pourra, par exemple, se référer aux dossiers N20 et J2230 des TECHNIQUES DE L'INGENIEUR, respectivement intitulés « *Aérogels. Aspect matériau* » et « *Elaboration des gels et aérogels* ».

Dans un certain nombre de cas et, notamment, lorsque le traitement de la surface consiste en un nettoyage, le procédé de l'invention est, de préférence, mis en oeuvre dans une enceinte ou chambre à atmosphère contrôlée dans laquelle on fait, par exemple, régner une pression inférieure à la pression atmosphérique, typiquement de 10⁻² à 10⁻⁸ Pa, ainsi qu'éventuellement une température supérieure à la température ambiante, par exemple une température de 50 à 300°C. Cette enceinte peut notamment être une chambre à vide.

L'agent d'éjection est alors projeté sur la surface à traiter à l'aide de moyens de projection qui peuvent être disposés à l'intérieur ou à l'extérieur de l'enceinte selon la nature de l'agent d'éjection. Ainsi, si l'agent d'éjection est un rayonnement électro-magnétique et, en particulier, un faisceau laser, les moyens d'éjection peuvent être disposés à l'extérieur de l'enceinte. Dans ce dernier cas, il suffit que l'enceinte soit en un matériau transparent à la longueur d'onde du rayonnement électromagnétique ou comprenne un hublot en un tel matériau pour que le rayonnement électromagnétique puisse pénétrer dans cette enceinte.

Par ailleurs, l'agent d'éjection peut être projeté sur la surface à traiter selon un axe orthogonal à cette surface ou, au contraire, selon un axe incliné par rapport à la normale à cette surface, l'angle formé par cet axe et cette normale étant alors généralement de 20 à 70° et, le plus souvent, de 30 à 60°.

En outre, l'agent d'éjection peut atteindre la surface à traiter sans traverser la pièce d'aérogel ou l'une quelconque des pièces d'aérogel ou, au contraire, atteindre cette surface après avoir traversé la pièce d'aérogel ou l'une des pièces d'aérogel. Dans ce dernier cas, la pièce d'aérogel ainsi traversée peut être munie d'une ouverture traversante de dimensions adaptées pour permettre le passage de l'agent d'éjection, ou bien être formée de plusieurs blocs d'aérogel non jointifs entre eux, ou bien encore, si l'agent d'éjection est un rayonnement électro-magnétique et, en particulier un faisceau laser, être constituée d'un aérogel transparent à la longueur d'onde de ce rayonnement.

Ainsi, par exemple, certains aérogels comme les aérogels à base de silice et les aérogels à base de mélamine/formaldéhyde sont transparents à la lumière visible (λ = 400 - 800 nm) et peuvent avantageusement être utilisés dans le cas où la configuration de mise en oeuvre du procédé choisie implique que la pièce d'aérogel ou que l'une au moins des pièces d'aérogel prévues pour piéger les matières éjectées de la surface à traiter soit transparente dans le domaine du visible.

Selon un mode de mise en oeuvre particulièrement préféré du procédé de l'invention, l'agent d'éjection est un faisceau laser en raison des très nombreux avantages qu'offre l'utilisation de ce type de faisceau dans le traitement de surfaces et, en particulier, de la précision avec laquelle ce traitement peut être réalisé, de l'absence d'effet abrasif, et plus généralement d'effet agressif pour la surface à traiter, de l'absence de pollution liée à ce traitement (ni apport de matière, ni émanation de gaz) et de la simplicité de manipulation d'un laser.

Le laser est préférentiellement un laser à gaz du type laser à excimère ou laser CO₂ TEA (de « ***T**ransversely **E**xcited **A**tmospheric pressure* »), ou bien un laser cristallin, typiquement à matrice YAG, c'est-à-dire constituée d'un grenat alumineux enrichi en yttrium, du type Yb:YAG (dopé à l'ytterbium) ou Nd:YAG (dopé au néodyme).

Il est généralement utilisé en mode pulsé, auquel cas la durée des impulsions, leur fréquence et la fluence (c'est-à-dire l'énergie des impulsions par unité de surface) sont adaptées à la nature des matières devant être éjectées de la surface à traiter, ainsi qu'à celle de cette surface dans le cas où la surface à traiter et les matières devant en être éjectées ne sont pas de la même nature, ce qui sera, par exemple, le cas si le traitement de la surface consiste en un décapage.

Ainsi, par exemple, pour décaper la surface d'un substrat en carbone revêtue d'une couche de peinture époxyde grise, on pourra utiliser un laser pulsé de type Nd:YAG, de longueur d'onde 1064 nm, avec une durée d'impulsion de 100 ns, un taux de répétition de 10 kHz et une fluence supérieure à 1 J/cm².

Lorsque l'agent d'éjection est un faisceau laser, les matières éjectées de la surface à traiter sont contenues dans un panache dit « *panache plasma* », d'axe orthogonal à cette surface et dont la morphologie dépend de la nature de la surface à traiter, des paramètres d'utilisation du laser et des conditions environnementales (conditions de pression, par exemple).

Aussi, dans ce mode de mise en oeuvre particulièrement préféré, la pièce d'aérogel ou l'une des pièces d'aérogel est, de préférence, disposée en vis-à-vis de la surface à traiter, en étant parallèle ou sensiblement parallèle à elle, et la projection de cette pièce dans l'axe du panache présente, dans le plan perpendiculaire à cet axe dans lequel ce panache a les plus grandes dimensions (c'est-à-dire le plus grand diamètre dans le cas où le panache plasma a une section transversale circulaire), un périmètre dans lequel s'inscrit le périmètre dudit panache, de manière à garantir un piégeage de toutes les matières éjectées de ladite surface.

Cette pièce d'aérogel peut être de forme quelconque mais elle se présente, de préférence, sous la forme d'un parallélépipède, en particulier un parallélépipède rectangle comme un cube.

Conformément à l'invention, la surface à traiter peut être de tout type. Ainsi, il peut s'agir d'une surface inorganique du type surface en pierre, plâtre, ciment, verre, métal, alliage métallique, céramique, émail, porcelaine, peinture minérale, etc, ou organique du type surface en carbone, bois, matière plastique, élastomère, textile (toile par exemple), peinture organique, etc.

Par ailleurs, l'objet auquel appartient la surface à traiter peut aussi bien être un objet que l'on peut aisément déplacer comme un dispositif d'électronique ou d'optique, qu'un objet qui ne peut pas être déplacé et qui nécessite donc d'être traité sur le lieu où il se trouve comme la façade d'un monument.

Le traitement de cette surface peut notamment consister en un nettoyage, un satinage, un polissage, un ébavurage, une gravure, un marquage ou encore une opération consistant à préparer cette surface en vue de la soumettre ultérieurement à un autre traitement comme un collage, une métallisation, un émaillage, une peinture ou un vernissage.

Il s'agit, de préférence, d'un nettoyage - ce terme devant être pris dans le cadre de l'invention au sens large, c'est-à-dire comme englobant le décapage, la dépollution et la décontamination en matières toxiques, notamment radioactives -, d'un marquage ou bien d'une gravure, le procédé de l'invention s'étant, en effet, révélé être particulièrement utile dans ces trois types de traitement.

Quoi qu'il en soit, le procédé de l'invention peut comprendre de plus l'analyse des matières piégées dans la pièce ou les pièces d'aérogel.

Cette analyse peut consister en une analyse très simple des matières éjectées de la surface à traiter comme, par exemple, une simple évaluation par pesée de la masse de ces matières ou, au contraire, comprendre toute une série d'opérations visant à caractériser sur le plan physique et/ou chimique les matières éjectées de la surface à traiter et faisant appel à des techniques comme la microscopie électronique à balayage ou la spectrométrie de masse et, en particulier, la spectrométrie de masse des ions secondaires, plus connue sous le sigle SIMS correspondant à « ***S**econdary-**I**on **M**ass **S**pectrometry* ».

L'analyse peut aussi consister à déterminer la vitesse d'éjection des matières à partir de la surface à traiter, auquel cas un étalonnage de la profondeur de pénétration dans l'aérogel en fonction de la vitesse d'éjection est préalablement réalisé.

L'invention a aussi pour objet un dispositif permettant de mettre en oeuvre le procédé de traitement d'une surface qui vient d'être décrit, lequel dispositif comprend :
- des moyens pour projeter sur cette surface un agent d'éjection choisi parmi les gaz, les fluides à l'état supercritique, les matériaux solides sous forme divisée, éventuellement dans un vecteur gazeux, et les rayonnements électromagnétiques ; et
- une ou plusieurs pièces d'un aérogel pour le piégeage des matières éjectées de la surface par l'agent d'éjection lors du traitement de ladite surface.

Pour les mêmes raisons que celles précédemment mentionnées, on préfère que les moyens de projection de l'agent d'éjection soient des moyens qui permettent de projeter un gaz, un fluide à l'état supercritique, de la carboglace ou un rayonnement électromagnétique.

Quant à l'aérogel, il peut, comme précédemment, être choisi notamment parmi les aérogels inorganiques à base d'un oxyde métallique simple, mixte ou multiple, les aérogels organiques et les aérogels hybrides organique-inorganique.

Selon un mode de réalisation préféré du dispositif de l'invention, celui-ci comprend de plus une enceinte ou chambre à atmosphère contrôlable, c'est-à-dire qui est munie de moyens propres à instaurer et maintenir dans cette enceinte une atmosphère contrôlée. Cette enceinte, qui peut notamment être une chambre à vide, comprend des moyens pour maintenir l'objet auquel appartient la surface à traiter ainsi que des moyens pour maintenir la pièce ou les pièces d'aérogel.

Dans ce mode de réalisation, les moyens pour projeter l'agent d'éjection peuvent se situer à l'intérieur ou à l'extérieur de l'enceinte selon la nature de l'agent d'éjection. Ainsi, si l'agent d'éjection est prévu pour être un rayonnement électromagnétique et, en particulier, un faisceau laser, les moyens d'éjection peuvent se situer à l'extérieur de cette enceinte. Dans ce cas, cette dernière comprend, de préférence, un hublot en un matériau transparent à la longueur d'onde dudit rayonnement électromagnétique.

Par ailleurs, les moyens pour projeter l'agent d'éjection et les moyens pour maintenir l'objet dans l'enceinte peuvent être positionnés les uns par rapport aux autres de sorte que l'agent d'éjection puisse être projeté sur la surface à traiter selon un axe orthogonal à cette surface ou, au contraire, selon un axe incliné par rapport à la normale à cette surface, l'angle formé par cet axe et cette normale étant alors généralement de 20 à 70° et, le plus souvent, de 30 à 60°.

En outre, les moyens pour projeter l'agent d'éjection et les moyens pour maintenir la pièce ou les pièces d'aérogel dans l'enceinte peuvent être positionnés les uns par rapport aux autres de sorte que l'agent d'éjection puisse atteindre la surface à traiter sans traverser la pièce d'aérogel ou l'une quelconque des pièces d'aérogel ou, au contraire, atteindre cette surface après avoir traversé la pièce d'aérogel ou l'une des pièces d'aérogel.

Selon un mode de réalisation particulièrement préféré du dispositif de l'invention, les moyens pour projeter l'agent d'éjection consistent en un laser, de préférence un laser à gaz ou un laser cristallin typiquement à matrice YAG.

Auquel cas, les moyens pour maintenir l'objet et les moyens pour maintenir la pièce ou les pièces d'aérogel sont, de préférence, positionnés les uns par rapport aux autres de sorte que la pièce d'aérogel ou l'une des pièces d'aérogel puisse se trouver en vis-à-vis de cette surface, en étant parallèle ou sensiblement parallèle à elle.

De plus, les dimensions de cette pièce sont préférentiellement choisies de sorte que sa projection dans l'axe du panache prévu pour être produit par le faisceau émis par le laser puisse présenter, dans le plan perpendiculaire à cet axe dans lequel ce panache aura les plus grandes dimensions, un périmètre dans lequel pourra s'inscrire le périmètre dudit panache.

Le présent document décrit encore l'utilisation d'un aérogel pour piéger les matières qui sont éjectées d'une surface que comporte un objet au cours d'un traitement auquel est soumise cette surface.

L'invention présente de nombreux avantages notamment en raison de ce qu'elle prévoit d'utiliser un aérogel comme piège.

En effet :
- les aérogels étant inertes d'un point de vue chimique, ils ne modifient pas, sur le plan chimique, les matières qui s'y piègent ;
- les aérogels ayant typiquement des tailles de pore de l'ordre de 100 micromètres et une consistance souple et élastique favorisant la pénétration de matières sans écrasement, ils ne modifient pas non plus, sur le plan physique, les matières qui s'y piègent ;
- les aérogels ayant une très haute porosité (typiquement supérieure à 95% et généralement au-delà de 97%), ils sont capables de piéger de très grandes quantités de matières avant d'arriver à saturation ;
- les aérogels étant très légers, les pièces d'aérogel peuvent, même lorsqu'elles sont de grandes dimensions, être aisément manipulées et notamment être maintenues sur des bras de fixation dont la mobilité peut être contrôlée à distance ;
- les aérogels étant résistants à la chaleur (jusqu'à 1200°C pour les aérogels à base de silice), ils peuvent être utilisés pour des traitements de surfaces nécessitant de très hautes températures ;
- les aérogels ayant d'excellentes propriétés d'isolation thermique, ils peuvent remplir, outre le rôle de piège, un rôle d'écran à la chaleur et servir à ce titre à protéger thermiquement les moyens de projection de l'agent d'éjection lorsque ces moyens sont utilisées à l'intérieur d'une enceinte chauffée et diminuer ainsi, voire supprimer, la nécessité de recourir à des systèmes visant à refroidir cette enceinte ;
- un certain nombre d'aérogels étant transparents à la lumière visible, ils permettent de visualiser directement les matières qui s'y sont piégées.

D'autres avantages et caractéristiques de l'invention ressortiront du complément de description qui suit, qui se rapporte à des exemples de dispositifs de l'invention et qui se réfère aux figures annexées.

### BREVE DESCRIPTION DES FIGURES

La figure 1 illustre, schématiquement et en conditions d'utilisation, un premier exemple d'un dispositif de l'invention.
La figure 2 illustre, schématiquement et en conditions d'utilisation, une variante du dispositif de l'invention illustré sur la figure 1.
La figure 3 illustre, schématiquement et en conditions d'utilisation, un deuxième exemple d'un dispositif de l'invention.

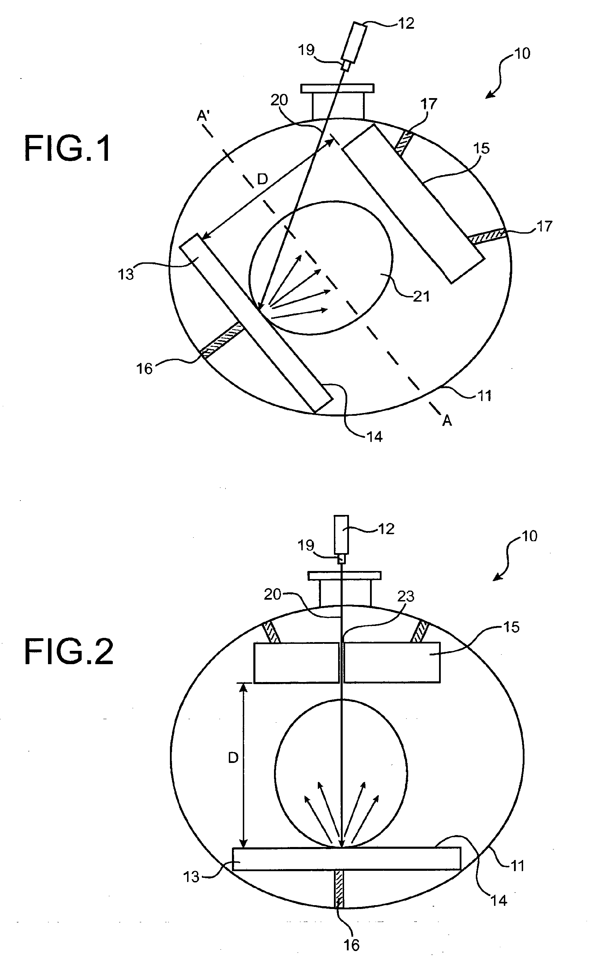

Sur les figures 1 à 3, les mêmes références sont utilisées pour désigner les mêmes éléments.

### EXPOSE DETAILLE DE L'INVENTION

On se réfère à la figure 1 qui représente, schématiquement et en conditions d'utilisation, un premier exemple d'un dispositif de l'invention spécialement conçu pour traiter la surface d'un objet dans une enceinte à atmosphère contrôlée, au moyen d'un faisceau émis par un laser situé hors de cette enceinte.

Aussi, comme visible sur cette figure, ce dispositif 10 comprend, d'une part, une enceinte 11 qui est munie de moyens (non représentés sur la figure 1) propres à instaurer et maintenir une atmosphère contrôlée dans cette enceinte, et, d'autre part, un laser 12 qui est disposé à l'extérieur de ladite enceinte.

L'enceinte 11 contient l'objet 13 dont la surface 14 doit être traitée et, située en vis-à-vis de cette surface et parallèle ou sensiblement parallèle à elle, une pièce d'un aérogel 15, de forme générale parallélépipédique.

L'objet 13 et la pièce d'aérogel 15 sont maintenus dans l'enceinte 11 par des moyens de maintien, respectivement 16 et 17, qui peuvent consister en tout dispositif propre à maintenir un objet en un endroit déterminé, du type porte-objet, pied de fixation, bras de fixation ou analogue. Avantageusement, l'un au moins et, de préférence, tous ces moyens de fixation sont mobiles et sont munis d'un système permettant de régler leur position et, partant, celles de l'objet 13 et de la pièce d'aérogel 15.

L'enceinte 11 comprend, par ailleurs, un hublot 18 en regard duquel est disposée la torche de projection 19 du laser 12 et qui est constitué d'un matériau transparent à la longueur d'onde d'émission du laser 12 de manière à laisser passer, en conditions d'utilisation, le faisceau 20 émis par ce laser.

Ainsi, par exemple, le hublot 18 peut être en verre de silice si le laser 12 émet dans le visible tandis qu'il peut être en pyrex si le laser 12 émet dans le proche infrarouge.

Les dimensions de la pièce d'aérogel 15 sont choisies de sorte qu'en conditions d'utilisation, la projection dans l'axe du panache plasma 21 généré par le faisceau 20 présente, dans le plan perpendiculaire à cet axe dans lequel le panache plasma 21 a les plus grandes dimensions (qui correspond au plan AA' sur la figure 1), un périmètre dans lequel s'inscrit ce panache.

Par ailleurs, la distance D qui sépare cette pièce de la surface 14 est choisie de sorte que toutes les matières qui, en conditions d'utilisation, sont éjectées de cette surface sous l'action du faisceau 20 et qui sont donc contenues dans le panache plasma 21 puissent être piégées dans la pièce d'aérogel 15. Typiquement, cette distance va de quelques micromètres à 10 cm selon les conditions de pression dans lesquelles est réalisé le traitement de surface.

La position des moyens de maintien 16 de l'objet 13 est, quant à elle, choisie de sorte qu'en conditions d'utilisation, compte tenu des dimensions de la pièce d'aérogel 15 et de la distance D qui sépare cette pièce de la surface 14, le faisceau 20 atteigne cette surface selon un axe incliné par rapport à la normale à cette surface, sans traverser ni même toucher la pièce d'aérogel 15.

Ainsi, à titre d'exemple, pour nettoyer la surface d'une pièce de carbone mesurant 3 cm de longueur sur 3 cm de largeur dans une chambre à vide munie d'un hublot en quartz de silice et où règnent une pression allant de 10⁻⁴ à 10⁻⁶ Pa et une température proche de l'ambiante, on peut utiliser :
- un laser Yb:YAG pulsé (longueur d'onde λ = 1064 nm) d'une puissance moyenne de 20 W, avec une énergie d'impulsion de 1 mJ par pulse, une durée d'impulsion de 120 ns, une fréquence d'impulsion de 20 kHz, une fluence de 7 J/cm² et un faisceau dont l'axe forme un angle de 30° avec la normale à la surface à nettoyer ; et
- une pièce d'un aérogel de silice présentant une porosité de 99,7%, qui se présente sous la forme d'un cube de 4 cm de côté et que l'on place à une distance de 5 à 10 cm de la surface à nettoyer.

On se réfère à présent à la figure 2 qui représente, schématiquement et en conditions d'utilisation, une variante du dispositif 10 illustré sur la figure 1, dans laquelle les moyens de maintien 16 de l'objet 13 et, donc, cet objet sont positionnés de sorte qu'en conditions d'utilisation le faisceau 20 émis par le laser 12 atteigne la surface 14 selon un axe orthogonal à cette surface.

Aussi, dans cette variante, la pièce d'aérogel 15, qui est également située en vis-à-vis de la surface 14, parallèlement ou sensiblement parallèlement à elle, se retrouve sur la trajectoire du faisceau 20.

Elle est donc soit munie d'une ouverture traversante 23 propre à laisser passer ce faisceau - comme montré sur la figure 2 -, soit constituée de plusieurs, par exemple, de deux blocs d'aérogel non jointifs entre eux.

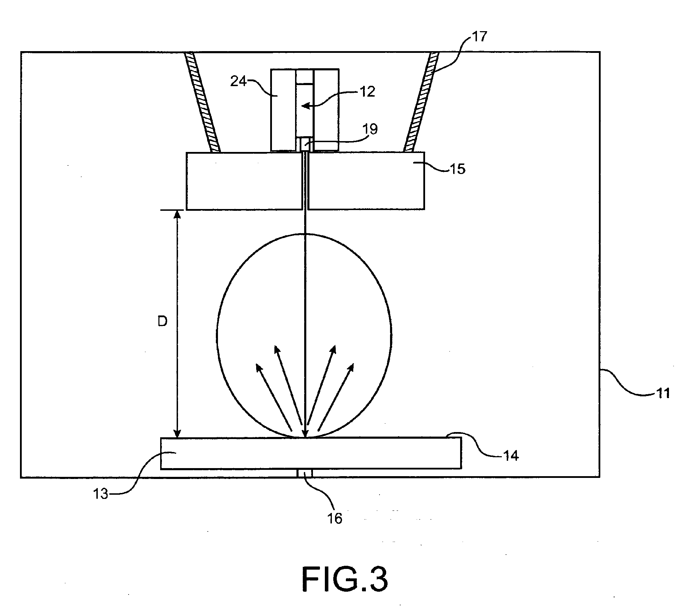

La figure 3 représente, schématiquement et en conditions d'utilisation, un deuxième exemple d'un dispositif de l'invention qui, lui, est spécialement conçu pour traiter la surface d'un objet dans une enceinte à atmosphère contrôlée, au moyen d'un faisceau émis par un laser situé dans cette enceinte.

Ce dispositif 10 diffère de celui illustré sur la figure 2 en ce que le laser 12 est disposé à l'intérieur de l'enceinte 11 - qui ne comporte donc plus de hublot 18 - et en ce que la pièce d'aérogel est intercalée entre ce laser et l'objet 13 dont la surface 14 doit être traitée.

La torche de projection 19 du laser 12 est située directement au contact de la pièce d'aérogel 15 de manière à ce qu'en conditions d'utilisation cette dernière puisse protéger le laser 12 non seulement des matières éjectées de la surface 14 mais également de la température élevée susceptible de régner à l'intérieur de l'enceinte 11.

Par ailleurs, la protection physique et éventuellement thermique du laser 12 est renforcée par la présence d'une ou plusieurs autres pièces d'aérogel formant un manchon 24 de protection autour du laser 12.

Que le dispositif de l'invention soit du type de celui illustré sur les figures 1 et 2 ou du type de celui illustré sur la figure 3, son utilisation est toujours extrêmement simple.

En effet, il suffit d'introduire l'objet dont la surface doit être traitée et la pièce ou les pièces d'aérogel dans l'enceinte, de les positionner dans la configuration choisie à l'aide des moyens dont est munie cette enceinte pour en assurer le maintien, de fermer l'enceinte, d'instaurer à l'intérieur de cette enceinte l'atmosphère dans laquelle on souhaite réaliser le traitement de surface pour pouvoir commencer ce traitement.

On projette alors le faisceau laser sur la surface à traiter et les matières éjectées de cette surface sous l'action de ce faisceau, sont aussitôt piégées dans la pièce ou les pièces d'aérogel.

Lorsque le traitement est terminé, l'objet et la pièce ou les pièces d'aérogel sont retirés de l'enceinte et une analyse des matières contenues dans l'aérogel est éventuellement effectuée.

Si nécessaire, la pièce ou les pièces d'aérogel peuvent bien entendu, être remplacées en cours de traitement.

## Revendications

1. Procédé de traitement d'une surface (14) que comporte un objet (13), qui comprend :
- l'éjection de matières à partir de cette surface par projection sur cette surface d'un agent d'éjection choisi parmi les gaz, les fluides à l'état supercritique, les matériaux solides sous forme divisée, éventuellement dans un vecteur gazeux, et les rayonnements électromagnétiques, et
- le piégeage des matières ainsi éjectées dans une ou plusieurs pièces (15) d'un aérogel qui sont situées sur les trajectoires de ces matières.

2. Procédé selon la revendication 1, dans lequel l'agent d'éjection est choisi parmi les gaz, les fluides à l'état supercritique, la carboglace et les rayonnements électromagnétiques.

3. Procédé selon la revendication 1 ou la revendication 2, dans lequel l'aérogel est choisi parmi les aérogels inorganiques à base d'un oxyde métallique simple, mixte ou multiple, les aérogels organiques et les aérogels hybrides organique-inorganique.

4. Procédé selon l'une quelconque des revendications précédentes, qui est mis en oeuvre dans une enceinte (11) à atmosphère contrôlée.

5. Procédé selon la revendication 4, dans l'agent d'éjection est projeté sur la surface à traiter à l'aide de moyens de projection qui sont disposés à l'intérieur de l'enceinte.

6. Procédé selon la revendication 4, dans lequel l'agent d'éjection est un rayonnement électromagnétique et est projeté sur la surface à traiter à l'aide de moyens (19) de projection qui sont disposés à l'extérieur de l'enceinte.

7. Procédé selon l'une quelconque des revendications précédentes, dans lequel l'agent d'éjection est projeté sur la surface à traiter selon un axe orthogonal à cette surface.

8. Procédé selon l'une quelconque des revendications 1 à 6, dans lequel l'agent d'éjection est projeté sur la surface à traiter selon un axe incliné par rapport à la normale à cette surface.

9. Procédé selon l'une quelconque des revendications précédentes, dans lequel l'agent d'éjection traverse la pièce d'aérogel ou l'une des pièces d'aérogel avant d'atteindre la surface à traiter.

10. Procédé selon l'une quelconque des revendications 1 à 8, dans lequel l'agent d'éjection ne traverse pas la pièce d'aérogel ou l'une quelconque des pièces d'aérogel avant d'atteindre la surface à traiter.

11. Procédé selon l'une quelconque des revendications précédentes, dans lequel l'agent d'éjection des matières est un faisceau laser (20).

12. Procédé selon la revendication 11, dans lequel la pièce d'aérogel ou l'une des pièces d'aérogel est située en vis-à-vis de la surface à traiter, en étant parallèle ou sensiblement parallèle à elle.

13. Procédé selon la revendication 12, dans lequel les matières éjectées de la surface à traiter étant contenues dans un panache (21) d'axe orthogonal à cette surface, la projection de la pièce d'aérogel dans l'axe du panache présente, dans le plan perpendiculaire à cet axe dans lequel le panache a les plus grandes dimensions, un périmètre dans lequel s'inscrit le périmètre dudit panache.

14. Procédé selon l'une quelconque des revendications précédentes, dans lequel le traitement de la surface consiste en un nettoyage, un marquage ou une gravure.

15. Procédé selon l'une quelconque des revendications précédentes, qui comprend de plus l'analyse des matières piégées dans la pièce ou les pièces d'aérogel.

16. Dispositif (10) de traitement d'une surface (14) que comporte un objet (13), qui comprend :
- des moyens (19) pour projeter sur cette surface un agent d'éjection choisi parmi les gaz, les fluides à l'état supercritique, les matériaux solides sous forme divisée, éventuellement dans un vecteur gazeux, et les rayonnements électromagnétique ; et **caractérisé par**
- une ou plusieurs pièces (15) d'un aérogel pour le piégeage des matières éjectées de la surface par l'agent d'éjection lors du traitement de ladite surface.

17. Dispositif selon la revendication 16, dans lequel les moyens pour projeter l'agent d'éjection sont des moyens de projection d'un gaz, d'un fluide à l'état supercritique, de carboglace ou d'un rayonnement électromagnétique.

18. Dispositif selon la revendication 16 ou la revendication 17, dans lequel l'aérogel est choisi parmi les aérogels inorganiques à base d'un oxyde métallique simple, mixte ou multiple, les aérogels organiques et les aérogels hybrides organique-inorganique.

19. Dispositif selon l'une quelconque des revendications 16 à 18, qui comprend une enceinte (11) à atmosphère contrôlable, laquelle enceinte comprend des moyens (16) pour maintenir l'objet et des moyens (17) pour maintenir la pièce ou les pièces d'aérogel.

20. Dispositif selon la revendication 19, dans lequel les moyens pour projeter l'agent d'éjection sont disposés à l'intérieur de l'enceinte.

21. Dispositif selon la revendication 19, dans lequel les moyens pour projeter l'agent d'éjection sont des moyens de projection d'un rayonnement électromagnétique et sont disposés à l'extérieur de l'enceinte.

22. Dispositif selon la revendication 21, dans lequel l'enceinte comprend un hublot (18) transparent à la longueur d'onde du rayonnement électromagnétique.

23. Dispositif selon l'une quelconque des revendications 19 à 22, dans lequel les moyens pour projeter l'agent d'éjection et les moyens pour maintenir l'objet sont positionnés les uns par rapport aux autres de sorte que l'agent d'éjection puisse être projeté sur la surface à traiter selon un axe orthogonal à cette surface.

24. Dispositif selon l'une quelconque des revendications 19 à 22, dans lequel les moyens pour projeter l'agent d'éjection et les moyens pour maintenir l'objet sont positionnés les uns par rapport aux autres de sorte que l'agent d'éjection puisse être projeté sur la surface à traiter selon un axe incliné par rapport à la normale à cette surface.

25. Dispositif selon l'une quelconque des revendications 19 à 24, dans lequel les moyens pour projeter l'agent d'éjection et les moyens pour maintenir la pièce ou les pièces d'aérogel sont positionnés les uns par rapport aux autres de sorte que l'agent d'éjection puisse atteindre la surface à traiter sans traverser la pièce d'aérogel ou l'une quelconque des pièces d'aérogel.

26. Dispositif selon l'une quelconque des revendications 19 à 24, dans lequel les moyens pour projeter l'agent d'éjection et les moyens pour maintenir la pièce ou les pièces d'aérogel sont positionnés les uns par rapport aux autres de sorte que l'agent d'éjection puisse atteindre la surface à traiter après avoir traversé la pièce d'aérogel ou l'une des pièces d'aérogel.

27. Dispositif selon l'une quelconque des revendications 16 à 26, dans lequel les moyens pour projeter cet agent consistent en un laser (12).

28. Dispositif selon la revendication 27 dépendante de la revendication 19, dans lequel les moyens pour maintenir l'objet et les moyens pour maintenir la pièce ou les pièces d'aérogel sont positionnés les uns par rapport aux autres de sorte que la pièce d'aérogel ou l'une des pièces d'aérogel puisse se trouver en vis-à-vis de la surface à traiter, en étant parallèle ou sensiblement parallèle à elle.

29. Dispositif selon la revendication 28, dans lequel les dimensions de la pièce d'aérogel sont choisies de sorte que sa projection dans l'axe du panache (21) prévu pour être produit par le faisceau (20) émis par le laser puisse présenter, dans le plan perpendiculaire à cet axe dans lequel ce panache présentera les plus grandes dimensions, un périmètre dans lequel pourra s'inscrire le périmètre dudit panache.

## Patentansprüche

1. Verfahren zur Behandlung einer Oberfläche (14) eines Objekts (13), umfassend :
- die von dieser Oberfläche ausgehende Ausschleuderung von Materialien durch das Bearbeiten dieser Oberfläche mit einem Ausschleuderungsmittel, ausgewählt unter den Gasen, den Fluiden im superkritischen Zustand, den festen Materialen in zerteilter Form, eventuell in einem Trägergas, und den elektromagnetischen Strahlen, und
- das Einfangen der auf diese Weise ausgeschleuderten Materialien in einem oder mehreren Stücken (15) eines Aerogels, die sich in den Flugbahnen dieser Materialien befinden.

2. Verfahren nach Anspruch 1, bei dem das Ausschleuderungsmittel ausgewählt wird unter den Gasen, den Fluiden im superkritischen Zustand, dem Trockeneis und den elektromagnetischen Strahlen.

3. Verfahren nach Anspruch 1 oder 2, bei dem das Aerogel ausgewählt wird unter den anorganischen Aerogelen auf der Basis eines metallischen Einfach-, Misch- oder Mehrfachoxids, den organischen Aerogelen und den organisch-anorganischen Hybridaerogelen.

4. Verfahren nach einem der vorhergehenden Ansprüche, das in einem Behälter (11) mit kontrollierter Atmosphäre durchgeführt wird.

5. Verfahren nach Anspruch 4, wobei das Ausschleuderungsmittel mit Hilfe von Spritz- bzw. Sendeeinrichtungen auf die zu behandelnde Oberfläche gespritzt bzw. gesendet wird, die sich im Innern des Behälters befinden.

6. Verfahren nach Anspruch 4, bei dem das Ausschleuderungsmittel eine elektromagnetische Strahlung ist, die mit Hilfe von Sendeeinrichtungen (19), die außerhalb des Behälters angeordnet sind, auf die zu behandelnde Oberfläche gesendet wird.

7. Verfahren nach einem der vorhergehenden Ansprüche, bei dem das Ausschleuderungsmittel gemäß einer Achse auf die zu behandelnde Oberfläche gespritzt bzw. gesendet wird, die senkrecht zu dieser Oberfläche ist.

8. Verfahren nach einem der Ansprüche 1 bis 6, bei dem das Ausschleuderungsmittel gemäß einer Achse auf die zu behandelnde Oberfläche gesendet wird, die geneigt ist in Bezug auf die Normale bzw. Senkrechte zu dieser Oberfläche.

9. Verfahren nach einem der vorhergehenden Ansprüche, bei dem das Ausschleuderungsmittel, bevor es die zu behandelnde Oberfläche erreicht, das Aerogelstück oder eines der Aerogelstücke durchquert.

10. Verfahren nach einem der Ansprüche 1 bis 8, bei dem das Ausschleuderungsmittel das Aerogelstück oder eines der Aerogelstücke nicht durchquert vor dem Erreichen der zu behandelnde Oberfläche.

11. Verfahren nach einem der vorhergehenden Ansprüche, bei dem das Ausschleuderungsmittel ein Laserstrahl (20) ist.

12. Verfahren nach Anspruch 11, bei dem das Aerogelstück oder eines der Aerogelstücke der zu behandelnden Oberfläche gegenübersteht, wobei sie parallel oder im Wesentlichen parallel zu dieser ist.

13. Verfahren nach Anspruch 12, bei dem die von der zu behandelnden Oberfläche ausgeschleuderten Materialien enthalten sind in einer Wolke (21) mit zu dieser Oberfläche senkrechter Achse, wobei die Projektion des Aerogelstücks in der Achse der Wolke auf die zu dieser Achse senkrechten Ebene, in der die Wolke ihre größte Ausdehnung hat, einen den Umfang der genannten Wolke einbeschreibenden Umfang hat.

14. Verfahren nach einem der vorhergehenden Ansprüche, bei dem die Behandlung der Oberfläche eine Reinigung, eine Markierung oder eine Ätzung ist.

15. Verfahren nach einem der vorhergehenden Ansprüche, das zudem die Analyse der in dem Aerogelstück oder den Aerogelstücken gefangenen Materialien umfasst.

16. Vorrichtung (10) zu Behandlung einer Oberfläche (14) eines Objekts (13), umfassend :
- Einrichtungen (19) zum Spritzen bzw. Senden eines Ausschleuderungsmittels auf diese Oberfläche, das ausgewählt wird unter den Gasen, den Fluiden im superkritischen Zustand, den festen Materialen in zerteilter Form, eventuell in einem Trägergas, und den elektromagnetischen Strahlen ;
**gekennzeichnet durch**
- ein oder mehrere Stücke (15) eines Aerogels zum Einfangen der **durch** das Ausschleuderungsmittel bei der Behandlung der genannten Oberfläche von der Oberfläche ausgeschleuderten Materialien.

17. Vorrichtung nach Anspruch 16, bei der die Einrichtungen zur Anwendung der Ausschleuderungsmittel Einrichtungen zum Spritzen bzw. Senden eines Gases, eines Fluids im superkritischen Zustand, von Trockeneis oder von einer elektromagnetischen Strahlung umfassen.

18. Vorrichtung nach Anspruch 16 oder 17, bei der das Aerogel ausgewählt wird unter den anorganischen Aerogelen auf der Basis eines metallischen Einfach-, Misch- oder Mehrfachoxids, den organischen Aerogelen und den organisch-anorganischen Hybridaerogelen.

19. Vorrichtung nach einem der Ansprüche 16 bis 18, die einen Behälter (11) mit kontrollierter Atmosphäre umfasst, wobei dieser Behälter Einrichtungen (16) zum Fixieren des Objekts und Einrichtungen zum Fixieren des Aerogelstücks oder der Aerogelstücke umfasst.

20. Vorrichtung nach Anspruch 19, bei der sich die Einrichtungen zur Anwendung des Ausschleuderungsmittels im Innern des Behälters befinden.

21. Vorrichtung nach Anspruch 19, bei der die Einrichtungen zur Anwendung des Ausschleuderungsmittels Einrichtungen zum Aussenden einer elektromagnetischen Strahlung sind, die außerhalb des Behälters angeordnet sind.

22. Vorrichtung nach Anspruch 21, bei der der Behälter ein für die Wellenlänge der elektromagnetischen Strahlung durchlässiges Fenster (18) umfasst.

23. Vorrichtung nach einem der Ansprüche 19 bis 22, bei der die Einrichtungen zum Spritzen bzw. Senden des Ausschleuderungsmittels und die Einrichtungen zum Fixieren des Objekts so zueinander positioniert sind, dass das Ausschleuderungsmittel gemäß einer zu der zu behandelnden Oberfläche rechtwinkligen Achse auf diese Oberfläche gespritzt bzw. gesendet werden können.

24. Vorrichtung nach einem der Ansprüche 19 bis 22, bei der die Einrichtungen zum Spritzen bzw. Senden des Ausschleuderungsmittels und die Einrichtungen zum Fixieren des Objekts so zueinander positioniert sind, dass das Ausschleuderungsmittel gemäß einer Achse auf die zu behandelnde Oberfläche gespritzt bzw. gesendet werden kann, die geneigt ist in Bezug auf die Normale bzw. Senkrechte zu dieser Oberfläche.

25. Vorrichtung nach einem der Ansprüche 19 bis 24, bei der die Einrichtungen zum Spritzen bzw. Senden des Ausschleuderungsmittels und die Einrichtungen zum Fixieren des Objekts so zueinander positioniert sind, dass das Ausschleuderungsmittel die zu behandelnde Oberfläche erreichen kann, ohne das Aerogelstück oder irgendeines der Aerogelstücke durchqueren zu müssen.

26. Vorrichtung nach einem der Ansprüche 19 bis 24, bei der die Einrichtungen zum Spritzen bzw. Senden des Ausschleuderungsmittels und die Einrichtungen zum Fixieren des Objekts so zueinander positioniert sind, dass das Ausschleuderungsmittel die zu behandelnde Oberfläche erreichen kann, nachdem es das Aerogelstück oder irgendeines der Aerogelstücke durchquert hat.

27. Vorrichtung nach einem der Ansprüche 16 bis 26, bei der die Einrichtungen zum Senden dieses Mittels aus einem Laser (12) bestehen.

28. Vorrichtung nach Anspruch 27, abhängig von Anspruch 19, bei dem die Einrichtungen zum Fixieren des Objekts und die Einrichtungen zum Fixieren der Aerogelstücks oder der Aerogelstücke so zueinander positioniert sind, dass das Aerogelstück oder eines der Aerogelstücke der zu behandelnden Oberfläche gegenübersteht und dabei parallel oder im Wesentlichen parallel zu ihr ist.

29. Vorrichtung nach Anspruch 28, bei der die Dimensionen des Aerogelstücks so gewählt werden, dass seine Projektion in der Achse der Wolke (21), erzeugt durch den von dem Laser emittierten Strahl (20), in bzw. auf der zu dieser Achse senkrechten Ebene, in der diese Wolke die größten Ausdehnungen hat, einen Umfang aufweisen kann, in den der Umfang der genannten Wolke einbeschrieben werden kann.

## Claims

1. Method for treating a surface (14) comprised by an object (13), which comprises:
- the ejection of matter from this surface by projection on this surface of an ejection agent chosen among gases, fluids in supercritical state, solid materials in divided form, possibly in a gas vector, and electromagnetic radiation; and
- trapping the matter thus ejected in one or several pieces (15) of an aerogel that are situated on the trajectories of said matter.

2. Method according to claim 1, wherein the injection agent is chosen among gases, fluids in supercritical state, dry ice, and electromagnetic radiation.

3. Method according to claim 1 or claim 2, wherein the aerogel is chosen among inorganic aerogels with a base of a simple, mixed, or multiple metal oxide, organic aerogels, and organic-inorganic hybrid aerogels.

4. Method according to any one of the preceding claims, which is implemented in a controlled-atmosphere enclosure (11).

5. Method according to claim 4, wherein the ejection agent is projected on the surface to be treated using projection means that are arranged inside the enclosure.

6. Method according to claim 4, wherein the ejection agent is an electromagnetic radiation and is projected on the surface to be treated using projection means (19) that are arranged outside the enclosure.

7. Method according to any one of the preceding claims, wherein the ejection agent is projected on the surface to be treated along an axis orthogonal to this surface.

8. Method according to any one of claims 1 to 6, wherein the ejection agent is projected on the surface to be treated along an axis that is inclined relative to the normal at this surface.

9. Method according to any one of the preceding claims, wherein the ejection agent passes through the aerogel piece or one of the aerogel pieces before reaching the surface to be treated.

10. Method according to any one of claims 1 to 8, wherein the ejection agent does not pass through the aerogel piece or any one of the aerogel pieces before reaching the surface to be treated.

11. Method according to any one of the preceding claims, wherein the ejection agent of the matter is a laser beam (20).

12. Method according to claim 11, wherein the aerogel piece or one of the aerogel pieces is situated opposite the surface to be treated, while being parallel or substantially parallel thereto.

13. Method according to claim 12, wherein the matter ejected from the surface to be treated being contained in a plume (21) with an axis orthogonal to this surface, the projection of the aerogel piece in the axis of the plume has, in the plane perpendicular to this axis in which the plume has the largest dimensions, a perimeter in which the perimeter of said plume fits.

14. Method according to any one of the preceding claims, wherein the surface treatment consists of cleaning, marking or etching.

15. Method according to any one of the preceding claims, which also comprises the analysis of the matter trapped in the aerogel piece(s).

16. Device (10) for treating a surface (14) comprised by an object (13), comprising:
- means (19) for projecting, on this surface, an ejection agent chosen from gases, fluids in supercritical state, solid materials in divided form, potentially in a gas vector, and electromagnetic radiation; and **characterized by**
- one or several pieces (15) of an aerogel for trapping the matter ejected by the ejection agent during the treatment of said surface.

17. Device according to claim 16, wherein the means for projecting the ejection agent are means for projecting a gas, a fluid in supercritical state, dry ice, or electromagnetic radiation.

18. Device according to claim 16 or claim 17, wherein the aerogel is chosen among inorganic aerogels with a base of a simple, mixed, or multiple metal oxide, organic aerogels, and organic-inorganic hybrid aerogels.

19. Device according to any one of claims 16 to 18, which comprises a controllable-atmosphere enclosure (11), which enclosure comprises means (16) for maintaining the object and means (17) for maintaining the aerogel piece(s).

20. Device according to claim 19, wherein the means for projecting the ejection agent are arranged inside the enclosure.

21. Device according to claim 19, wherein the means for projecting the ejection agent are means for projecting electromagnetic radiation and are arranged outside the enclosure.

22. Device according to claim 21, wherein the enclosure comprises a porthole (18) transparent to the wavelength of the electromagnetic radiation.

23. Device according to any one of claims 19 to 22, wherein the means for projecting the ejection agent and the means for maintaining the object are positioned relative to each other so that the ejection agent can be projected on the surface to be treated along an axis orthogonal to this surface.

24. Device according to any one of claims 19 to 22, wherein the means for projecting the ejection agent and the means for maintaining the object are positioned relative to each other so that the ejection agent can be projected on the surface to be treated along an axis that is inclined relative to the normal at this surface.

25. Device according to any one of claims 19 to 24, wherein the means for projecting the ejection agent and the means for maintaining the aerogel piece(s) are positioned relative to each other so that the ejection agent can reach the surface to be treated without passing through the aerogel piece or any one of the aerogel pieces.

26. Device according to any one of claims 19 to 24, wherein the means for projecting the ejection agent and the means for maintaining the aerogel piece(s) are positioned relative to each other so that the ejection agent can reach the surface to be treated after having passed through the aerogel piece or one of the aerogel pieces.

27. Device according to any one of claims 16 to 26, wherein the means for projecting said agent consist of a laser (12).

28. Device according to claim 27 dependent on claim 19, wherein the means for maintaining the object and the means for maintaining the aerogel piece(s) are positioned relative to each other so that the aerogel piece or one of the aerogel pieces can be located opposite the surface to be treated, while being parallel or substantially parallel thereto.

29. Device according to claim 28, wherein the dimensions of the aerogel piece are chosen so that its projection in the axis of the plume provided to be produced by the beam emitted by the laser can have, in the plane perpendicular to this axis in which this plume will have the largest dimensions, a perimeter in which the perimeter of said plume can fit.
